(19) Europäisches Patentamt
European Patent Office
Office européen des brevets

(11) **EP 4 345 118 A1**

(12) **EUROPEAN PATENT APPLICATION**

(43) Date of publication:
**03.04.2024 Bulletin 2024/14**

(21) Application number: **23192947.2**

(22) Date of filing: **23.08.2023**

(51) International Patent Classification (IPC):
***C08G 18/08*** *(2006.01)* ***C08G 18/12*** *(2006.01)*
***C08G 18/32*** *(2006.01)* ***C08G 18/34*** *(2006.01)*
***C08G 18/44*** *(2006.01)* ***C08G 18/75*** *(2006.01)*
***C08G 18/79*** *(2006.01)* ***C08L 75/04*** *(2006.01)*
***C09D 175/04*** *(2006.01)* ***C08G 64/02*** *(2006.01)*

(52) Cooperative Patent Classification (CPC):
(C-Sets available)
**C08G 18/44; C08G 18/0823; C08G 18/12; C08G 18/3228; C08G 18/348; C08G 18/755; C08G 18/791; C08G 64/0208; C08G 64/183; C08G 64/305; C08L 75/04; C09D 169/00; C09D 175/04** (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.09.2022 JP 2022154665**

(71) Applicant: **Asahi Kasei Kabushiki Kaisha**
**Tokyo 1000006 (JP)**

(72) Inventor: **Kawai, Yasufumi**
**Tokyo, 1000006 (JP)**

(74) Representative: **Strehl Schübel-Hopf & Partner**
**Maximilianstrasse 54**
**80538 München (DE)**

(54) **AQUEOUS COMPOSITION AND USE THEREOF**

(57) Provided is an aqueous composition capable of shortening of a drying step, thinning of a cured product, and achievement of both flexibility and high endurance. The present invention provides an aqueous composition comprising the following component (A) and the following component (B): component (A): a water-dispersible polyol having a carbonate structure represented by the following formula (I), having a hydroxy value of 5 to 700 mg-KOH/g, and having a hydrophilic structure; and component (B): an aqueous polyurethane having a hydrophilic group: wherein R represents a linear aliphatic hydrocarbon group optionally having a heteroatom, a branched aliphatic hydrocarbon group optionally having a heteroatom, a cyclic aliphatic hydrocarbon group optionally having a heteroatom, an aromatic hydrocarbon group optionally having a heteroatom, or a combination thereof.

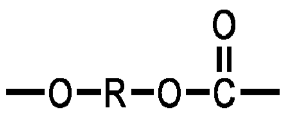
...(I)

EP 4 345 118 A1

(52) Cooperative Patent Classification (CPC): (Cont.)

C-Sets
**C08G 18/12, C08G 18/3228;**
**C09D 169/00, C08L 75/04**

## Description

### BACKGROUND OF THE INVENTION

#### Field of the Invention

The present invention relates to an aqueous composition and use thereof.

#### Description of the Related Art

Polyurethane resins have heretofore been used in a wide range of fields such as synthetic leather, artificial leather, adhesives, coating materials for furniture, and coating materials for automobiles. Of starting materials of the polyurethane resins, polyether polyol, polyester polyol, and polycarbonate polyol are used as polyol components to be reacted with isocyanate. In general, a polyurethane resin obtained using polycarbonate polyol as a polyol component is known to be superior in endurance such as heat resistance, moist heat resistance, chemical resistance, and scratch resistance to a polyurethane resin obtained using polyether polyol or polyester polyol.

In recent years, there has been a growing need for polycarbonate polyol dispersible in water as a sustainable material. For example, Japanese Patent Laid-Open No. 2014-80530 discloses a polycarbonate diol composition excellent in water dilutability. For example, International Publication No. WO 2015/170374 discloses a polycarbonate/polyoxyethylene block polymer for aqueous compositions that is excellent in water dilutability and can be used as an aqueous composition. For example, Japanese Patent Laid-Open No. 2019-210314 discloses a polycarbonate diol composition capable of forming a coating film excellent in contamination resistance and chemical resistance.

#### Prior Art Documents

Japanese Patent Laid-Open No. 2014-80530
International Publication No. WO 2015/170374
Japanese Patent Laid-Open No. 2019-210314
Japanese Patent No. 7114163

For achieving carbon neutral, it is necessary to boost reduction of greenhouse gas emissions. Tactics to reduce greenhouse gas emissions include, for example, reduction of greenhouse gas emissions during production by shortening of a drying step, thinning of a cured product, and the like. Such tactics also include, for example, reduction of greenhouse gas emissions using high-endurance materials that contribute to long life cycles of products.

Nonetheless, none of Japanese Patent Laid-Open No. 2014-80530, International Publication No. WO 2015/170374, Japanese Patent Laid-Open No. 2019-210314, and Japanese Patent No. 7114163 mention shortening of a drying step, thinning of a cured product, and achievement of both flexibility and high endurance when polycarbonate polyol dispersible in water is used. Thus, these patent literatures are still susceptible to improvement.

Accordingly, an object of the present invention is to provide an aqueous composition capable of shortening of a drying step, thinning of a cured product, and achievement of both flexibility and high endurance.

### SUMMARY OF THE INVENTION

The present inventor has conducted diligent studies to attain the object and has consequently completed the present invention by finding that an aqueous composition comprising a water-dispersible polyol having a specific structure and an aqueous polyurethane having a specific structure exerts shortening of a drying step, thinning of a cured product, flexibility, and high endurance.

Specifically, the present invention is configured as follows.

[1] An aqueous composition comprising the following component (A) and the following component (B):

component (A): a water-dispersible polyol having a carbonate structure represented by the following formula (I), having a hydroxy value of 5 to 700 mg-KOH/g, and having a hydrophilic structure; and
component (B): an aqueous polyurethane having a hydrophilic group:

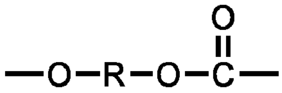 ...(I)

wherein R represents a linear aliphatic hydrocarbon group optionally having a heteroatom, a branched aliphatic hydrocarbon group optionally having a heteroatom, a cyclic aliphatic hydrocarbon group optionally having a heteroatom, an aromatic hydrocarbon group optionally having a heteroatom, or a combination thereof.

[2] The aqueous composition according to [1], wherein a content of the component (A) is 2 to 98% by mass and a content of the component (B) is 2 to 98% by mass based on the total mass of resin components of the component (A) and the component (B).
[3] The aqueous composition according to [1] or [2], wherein the component (A) has a number-average molecular weight of 200 to 5000.
[4] The aqueous composition according to any of [1] to [3], wherein the hydrophilic structure has a nonionic structure.
[5] The aqueous composition according to any of [1] to [3], wherein the hydrophilic structure has an anionic structure.
[6] The aqueous composition according to any of [1] to [5], wherein the component (B) has a cyclic structure.
[7] The aqueous composition according to any of [1] to [6], wherein the component (B) has an alicyclic structure.
[8] The aqueous composition according to any of [1] to [7], wherein the component (B) has a weight-average molecular weight of 10000 to 300000.
[9] The aqueous composition according to any of [1] to [8], wherein the component (B) comprises at least one selected from the group consisting of an ether group, an ester group, and a carbonate group.
[10] The aqueous composition according to any of [1] to [9], further comprising a curing agent as a component (C).
[11] The aqueous composition according to [10], wherein the component (C) is an isocyanate compound.
[12] The aqueous composition according to [10] or [11], wherein the component (C) has a cyclic structure.
[13] The aqueous composition according to any of [10] to [12], wherein the component (C) has an isocyanurate ring.
[14] A curable composition comprising the aqueous composition according to any of [1] to [13].
[15] A urethane cured product which is a cured product of the curable composition according to [14].

The present invention can provide an aqueous composition capable of shortening of a drying step, thinning of a cured product, and achievement of both flexibility and high endurance.

DETAILED DESCRIPTION OF THE PREFERRED EMBODIMENT

Hereinafter, the mode for carrying out the present invention (hereinafter, referred to as the "present embodiment") will be described in detail. The present invention is not limited by the description below and can be carried out with various modification or changes made therein without departing from the spirit of the present invention.

[Aqueous composition]

The aqueous composition of the present embodiment is an aqueous composition comprising the following component (A) and the following component (B):

component (A): a water-dispersible polyol having a carbonate structure represented by the following formula (I), having a hydroxy value of 5 to 700 mg-KOH/g, and having a hydrophilic structure; and
component (B): an aqueous polyurethane having a hydrophilic group:

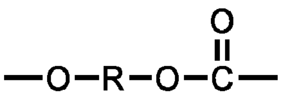 ...(I)

wherein R represents a linear aliphatic hydrocarbon group optionally having a heteroatom, a branched aliphatic hydrocarbon group optionally having a heteroatom, a cyclic aliphatic hydrocarbon group optionally having a heteroatom, an aromatic hydrocarbon group optionally having a heteroatom, or a combination thereof.

The aqueous composition of the present embodiment configured as described above is capable of shortening of a drying step, thinning of a cured product, and achievement of both flexibility and high endurance.

The content of the component (A) and the content of the component (B) in the aqueous composition of the present embodiment are preferably 2 to 98% by mass of the component (A) and 2 to 98% by mass of the component (B), more preferably 5 to 95% by mass of the component (A) and 5 to 95% by mass of the component (B), further preferably 10 to 90% by mass of the component (A) and 10 to 90% by mass of the component (B), still further preferably 15 to 85% by mass of the component (A) and 15 to 85% by mass of the component (B), particularly preferably 20 to 80% by mass of the component (A) and 20 to 80% by mass of the component (B), more particularly preferably 25 to 75% by mass of the component (A) and 25 to 75% by mass of the component (B), extremely preferably 30 to 70% by mass of the component (A) and 30 to 70% by mass of the component (B), more extremely preferably 35 to 65% by mass of the component (A) and 35 to 65% by mass of the component (B), based on the total mass of resin components of the component (A) and the component (B).

For example, in the case of preparing the aqueous composition using 10 g of the water-dispersible polyol (solid content: 100%) as the component (A) and 50 g of the aqueous polyurethane (solid content: 30%) as the component (B), the content of the component (A) is $[10 / (10 + 50 \times 0.3)] = 40\%$ by mass and the content of the component (B) is $[(50 \times 0.3) / (10 + 50 \times 0.3)] = 60\%$ by mass based on the total mass of resin components of the component (A) and the component (B).

When the content of the component (A) and the content of the component (B) in the aqueous composition fall within the range described above, the drying properties of a curable composition comprising the aqueous composition as well as the flexibility and endurance of a urethane cured product obtained using the aqueous composition tend to be better.

[Component (A): water-dispersible polyol]

The water-dispersible polyol of the present embodiment has a carbonate structure represented by the following formula (I), has a hydroxy value of 5 to 700 mg-KOH/g, and has a hydrophilic structure:

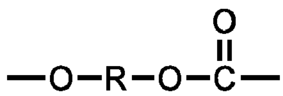 ... (I)

wherein R represents a linear aliphatic hydrocarbon group optionally having a heteroatom, a branched aliphatic hydrocarbon group optionally having a heteroatom, a cyclic aliphatic hydrocarbon group optionally having a heteroatom, an aromatic hydrocarbon group optionally having a heteroatom, or a combination thereof.

The "water-dispersible polyol" described herein is a mixture of a plurality of polyols, and each polyol has a carbonate structure represented by the formula (I). In this context, the phrase "having a hydrophilic structure" for the water-dispersible polyol means that all or some of a plurality of polyols constituting the water-dispersible polyol have a hydrophilic structure. A polyol having no hydrophilic structure generally does not have water dispersibility. Therefore, if such a polyol having no hydrophilic structure is contained in the water-dispersible polyol, the amount thereof is limited to an amount that can maintain the property of water dispersibility of the water-dispersible polyol as a whole (in other words, the water-dispersible polyol comprises polyols having a hydrophilic structure in an amount that attains water dispersibility).

As for the ratio of the carbonate structure represented by the formula (I) in the water-dispersible polyol of the present embodiment, the ratio of the carbonate structure to 100% by mass in total of resins in the water-dispersible polyol is preferably 20 to 99% by mass, more preferably 30 to 98% by mass, further preferably 40 to 97% by mass, still further preferably 45 to 96% by mass, particularly preferably 50 to 95% by mass.

In the present embodiment, the ratio of the carbonate structure represented by the formula (I) can be confirmed from the amounts of the starting materials added to be used or by the NMR measurement, FT-IR measurement, GC-MS measurement, LC-MS, MALDI-TOFMS measurement, or the like of the water-dispersible polyol and/or a hydrolysate of the water-dispersible polyol.

(Hydroxy value)

The lower limit of the hydroxy value of the water-dispersible polyol of the present embodiment is 5 mg-KOH/g or more, preferably 10 mg-KOH/g or more, more preferably 15 mg-KOH/g or more, further preferably 20 mg-KOH/g or more, still further preferably 25 mg-KOH/g or more, particularly preferably 30 mg-KOH/g or more, extremely preferably 35 mg-KOH/g or more, more extremely preferably 40 mg-KOH/g or more. The upper limit thereof is 700 mg-KOH/g or less, preferably 600 mg-KOH/g or less, more preferably 500 mg-KOH/g or less, further preferably 400 mg-KOH/g or less, still further preferably 350 mg-KOH/g or less, particularly preferably 250 mg-KOH/g or less, extremely preferably

200 mg-KOH/g or less, more extremely preferably 150 mg-KOH/g or less. The lower limit and the upper limit may be appropriately combined to define a numeric range. The range of the hydroxy value may be, for example, 5 to 700 mg-KOH/g, 10 to 600 mg-KOH/g, 15 to 500 mg-KOH/g, 20 to 400 mg-KOH/g, 25 to 350 mg-KOH/g, 30 to 250 mg-KOH/g, 35 to 200 mg-KOH/g, or 40 to 150 mg-KOH/g. When the hydroxy value of the water-dispersible polyol falls within the range described above, the drying properties of a curable composition comprising the water-dispersible polyol as well as the endurance of a urethane cured product obtained using the aqueous composition comprising the water-dispersible polyol tends to be better.

Examples of the method for controlling the hydroxy value of the water-dispersible polyol of the present embodiment within the range described above include, but are not particularly limited to, a method of adding starting materials polycarbonate polyol and polyvalent hydroxy compound having a hydrophilic structure such that the hydroxy value falls within the range described above in the production of the water-dispersible polyol of the present embodiment, and a control method of adding and/or extracting a polyvalent hydroxy compound in the production of the water-dispersible polyol.

In the present embodiment, the hydroxy value can be calculated by use of a method described in Examples mentioned later.

(Hydrophilic structure)

Examples of the hydrophilic structure of the water-dispersible polyol of the present embodiment include, but are not particularly limited to, nonionic structures, anionic structures, and cationic structures. Among them, a nonionic structure and an anionic structure are preferred from the viewpoint of versatility. Specific examples of the nonionic structure include, but are not particularly limited to, oxyethylene structures and polyoxyethylene structures. Specific examples of the anionic structure include, but are not particularly limited to, sulfonic acid structures and carboxyl structures.

The lower limit of the content of the hydrophilic structure in the water-dispersible polyol is not particularly limited. Preferably, the hydrophilic structure is contained so as to attain B or A in the evaluation of water dispersibility described in Examples mentioned later. More preferably, the hydrophilic structure is contained so as to attain A in the evaluation of water dispersibility described in Examples mentioned later. The upper limit thereof is preferably 50% by mol or less, more preferably 35% by mol or less, further preferably 30% by mol or less, still further preferably 25% by mol or less, particularly preferably 20% by mol or less, more particularly preferably 15% by mol or less, extremely preferably 10% by mol or less.

When the content of the hydrophilic structure in the water-dispersible polyol falls within the range described above, the water dispersibility of the water-dispersible polyol as well as the endurance of a cured product obtained from the aqueous composition comprising the water-dispersible polyol tends to be excellent.

(Water dispersibility)

The water-dispersible polyol of the present embodiment is capable of being dispersed in water. When the water-dispersible polyol of the present embodiment is capable of being dispersed in water, the aqueous composition comprising the water-dispersible polyol tends to have favorable stability.

The presence or absence of water dispersibility can be determined from water dispersibility described in Examples mentioned later.

(R)

In the formula (I), R is a divalent linear, branched, or cyclic aliphatic hydrocarbon group optionally having a heteroatom, a divalent aromatic hydrocarbon group optionally having a heteroatom, or a combination thereof.

When R is a divalent linear aliphatic hydrocarbon group optionally having a heteroatom, the lower limit of the molecular weight of R is preferably 20 or higher, more preferably 30 or higher, further preferably 40 or higher. The upper limit of the molecular weight of R is preferably 3000 or lower, more preferably 2500 or lower, further preferably 2200 or lower.

When R is, for example, an ethylene group ($-CH_2-CH_2-$), the molecular weight of R is $(12 + 1 \times 2) + (12 + 1 \times 2) = 28$.

Examples of the divalent linear aliphatic hydrocarbon group optionally having a heteroatom as R include, but are not particularly limited to, an ethylene group, a propylene group, a butylene group, a pentylene group, a hexylene group, a heptylene group, an octylene group, a nonylene group, a decylene group, an oxyethylene group, an oxytetramethylene group, a polyoxyethylene group, a polyoxytetramethylene group, a fluoroalkyl group, and a perfluoroalkyl group. Among them, a propylene group, a butylene group, a pentylene group, a hexylene group, a nonylene group, a decylene

group, an oxytetramethylene group, and a polyoxytetramethylene group are preferred from the viewpoint of versatility.

When R is a divalent branched aliphatic hydrocarbon group optionally having a heteroatom, the lower limit of the molecular weight of R is preferably 20 or higher, more preferably 30 or higher, further preferably 40 or higher. The upper limit of the molecular weight of R is preferably 3000 or lower, more preferably 2500 or lower, further preferably 2200 or lower.

Examples of the divalent branched aliphatic hydrocarbon group optionally having a heteroatom as R include, but are not particularly limited to, an isopropylene group, an isobutylene group, a tert-butylene group, an isopentylene group, a 2,2-dimethyltrimethylene group, an isohexylene group, an isoheptylene group, an isooctylene group, an oxy-1-methylethylene group, an oxy-2,2-dimethyltrimethylene group, and a polyoxy-1-methylethylene group. Among them, an isopropylene group, an isobutylene group, an isopentylene group, a 2,2-dimethyltrimethylene group, an isohexylene group, an oxy-1-methylethylene group, and a polyoxy-1-methylethylene group are preferred from the viewpoint of versatility.

When R is a divalent cyclic aliphatic hydrocarbon group optionally having a heteroatom, the lower limit of the molecular weight of R is preferably 20 or higher, more preferably 30 or higher, further preferably 40 or higher. The upper limit of the molecular weight of R is preferably 3000 or lower, more preferably 2500 or lower, further preferably 2200 or lower.

Examples of the divalent cyclic aliphatic hydrocarbon group optionally having a heteroatom as R include, but are not particularly limited to, a cyclobutylene group, a cyclopentylene group, a cyclohexylene group, and a cycloheptylene group.

When R is a divalent aromatic hydrocarbon group optionally having a heteroatom, the lower limit of the molecular weight of R is preferably 20 or higher, more preferably 30 or higher, further preferably 40 or higher. The upper limit of the molecular weight of R is preferably 3000 or lower, more preferably 2500 or lower, further preferably 2200 or lower.

Examples of the divalent aromatic hydrocarbon group optionally having a heteroatom as R include, but are not particularly limited to, a phenylene group and a naphthylene group.

Among others, R is preferably a divalent linear, branched or cyclic aliphatic hydrocarbon group optionally containing a heteroatom with a lower limit of the molecular weight of R being 20 or higher, more preferably a divalent linear aliphatic hydrocarbon group optionally containing a heteroatom with a lower limit of the molecular weight of R being 30 or higher, or a divalent branched aliphatic hydrocarbon group optionally containing a heteroatom with a lower limit of the molecular weight of R being 30 or higher, further preferably a divalent linear aliphatic hydrocarbon group optionally containing a heteroatom with the molecular weight of R being 40 or higher. R is preferably a divalent linear, branched or cyclic aliphatic hydrocarbon group optionally containing a heteroatom with an upper limit of the molecular weight of R being 3000 or lower, more preferably a divalent linear aliphatic hydrocarbon group optionally containing a heteroatom with an upper limit of the molecular weight of R being 2500 or lower, or a divalent branched aliphatic hydrocarbon group optionally containing a heteroatom with an upper limit of the molecular weight of R being 2500 or lower, further preferably a divalent linear aliphatic hydrocarbon group optionally containing a heteroatom with an upper limit of the molecular weight of R being 2200 or lower.

(Number-average molecular weight (Mn))

The lower limit of the number-average molecular weight (Mn) of the water-dispersible polyol of the present embodiment is preferably 200 or higher, more preferably 300 or higher, further preferably 400 or higher, still further preferably 500 or higher, particularly preferably 600 or higher, more particularly preferably 700 or higher, extremely preferably 800 or higher. The upper limit of the number-average molecular weight (Mn) of the water-dispersible polyol of the present embodiment is preferably 5000 or lower, more preferably 4500 or lower, further preferably 4000 or lower, still further preferably 3800 or lower, particularly preferably 3500 or lower, more particularly preferably 3300 or lower, extremely preferably 3000 or lower, more extremely preferably 2500 or lower. The lower limit and the upper limit may be appropriately combined to define a numeric range. The range of the number-average molecular weight (Mn) may be, for example, 200 to 5000, 300 to 4500, 400 to 4000, 500 to 3800, 600 to 3500, 700 to 3000, or 800 to 2500.

When the number-average molecular weight (Mn) falls within the range described above, the water-dispersible polyol of the present embodiment tends to be excellent in compatibility with dipropylene glycol monomethyl ether (hereinafter, also abbreviated to "DPM") and water dispersibility. Furthermore, the drying properties of a curable composition comprising the water-dispersible polyol as well as the endurance of a urethane cured product obtained using the aqueous composition comprising the water-dispersible polyol tends to be much superior.

Examples of the method for controlling the number-average molecular weight (Mn) of the water-dispersible polyol of the present embodiment within the range described above include, but are not particularly limited to, a method of adding starting materials polycarbonate polyol and polyvalent hydroxy compound having a hydrophilic structure such that the number-average molecular weight (Mn) falls within the range described above in the production of the water-dispersible polyol, and a control method of adding and/or extracting a polyvalent hydroxy compound in the production

of the water-dispersible polyol.

In the present embodiment, the number-average molecular weight (Mn) of the water-dispersible polyol can be calculated by GPC measurement (THF) described in Examples mentioned later.

(Molecular weight distribution (Mw/Mn))

The lower limit of the molecular weight distribution (Mw/Mn) of the water-dispersible polyol of the present embodiment is preferably 1.00 or more, more preferably 1.20 or more, further preferably 1.40 or more, still further preferably 1.50 or more, particularly preferably 1.60 or more, more particularly preferably 1.70 or more, extremely preferably 1.80 or more, more extremely preferably 1.90 or more. The upper limit thereof is preferably 7.00 or less, more preferably 6.00 or less, further preferably 5.00 or less, still further preferably 4.50 or less, particularly preferably 4.00 or less, more particularly preferably 3.70 or less, extremely preferably 3.50 or less, more extremely preferably 3.30 or less. The lower limit and the upper limit may be appropriately combined to define a numeric range. The range of the molecular weight distribution (Mw/Mn) may be, for example, 1.00 to 7.00, 1.20 to 6.00, 1.40 to 5.00, 1.50 to 4.50, 1.60 to 4.00, 1.70 to 3.70, 1.80 to 3.50, or 1.90 to 3.00.

When the molecular weight distribution (Mw/Mn) falls within the range described above, the water-dispersible polyol of the present embodiment is excellent in compatibility with DPM and water dispersibility. A curable composition comprising such a water-dispersible polyol tends to be much superior in drying properties. Furthermore, a urethane cured product obtained using the aqueous composition comprising such a water-dispersible polyol tends to be much superior in endurance.

Examples of the method for controlling the molecular weight distribution (Mw/Mn) of the water-dispersible polyol of the present embodiment within the range described above include, but are not particularly limited to, a method of adding starting materials polycarbonate polyol and polyvalent hydroxy compound having a hydrophilic structure such that the molecular weight distribution (Mw/Mn) falls within the range described above in the production of the water-dispersible polyol, and a control method of adding and/or extracting a polyvalent hydroxy compound in the production of the water-dispersible polyol.

In the present embodiment, the number-average molecular weight (Mn) and weight-average molecular weight (Mw) of the water-dispersible polyol can be calculated by GPC measurement (THF) described in Examples mentioned later. The molecular weight distribution (Mw/Mn) can be determined from the calculated number-average molecular weight (Mn) and weight-average molecular weight (Mw) according to the following expression (II):

Molecular weight distribution (Mw/Mn) = Weight-average molecular weight (Mw) / Number-average molecular weight (Mn) ... (II)

[Method for producing water-dispersible polyol]

The water-dispersible polyol of the present embodiment can be obtained, for example, through the reaction of a polycarbonate polyol with a polyvalent hydroxy compound having a hydrophilic structure in the presence of a transesterification reaction catalyst.

If too large an amount of the catalyst remains in the water-dispersible polyol, the water-dispersible polyol may become white turbid or may be easily stained by heating. Such a catalyst may inhibit reaction in producing a polyurethane or may accelerate the reaction too much. Too small an amount of the catalyst is not preferred because the progression of the reaction tends to be slowed.

Hence, the amount of the catalyst remaining in the water-dispersible polyol is not particularly limited. The lower limit of its content based on a catalyst metal is preferably 0.00001% by mass or more, more preferably 0.00005% by mass or more, further preferably 0.0001% by mass or more, still further preferably 0.0005% by mass or more. The upper limit thereof is preferably 0.1% by mass or less, more preferably 0.05% by mass or less, further preferably 0.03% by mass or less, still further preferably 0.02% by mass or less, particularly preferably 0.015% by mass or less, more particularly preferably 0.01% by mass or less, extremely preferably 0.005% by mass or less.

The chromaticity (APHA) of each starting material for use in producing the water-dispersible polyol of the present embodiment is preferably 100 or less, more preferably 80 or less, further preferably 50 or less, still further preferably 30 or less, particularly preferably 20 or less. When the APHA of the starting material is equal to or less than the value described above, the chromaticity of the resulting water-dispersible polyol as well as the design of a urethane cured product obtained using the aqueous composition comprising the water-dispersible polyol tends to be much superior.

(Polyvalent hydroxy compound having hydrophilic structure)

Examples of the polyvalent hydroxy compound having a hydrophilic structure for use in producing the water-dispersible polyol of the present embodiment include, but are not particularly limited to, polyvalent hydroxy compounds having a nonionic structure, such as diethylene glycol, triethylene glycol, tetraethylene glycol, heptaethylene glycol, hexaethylene glycol, and "polyethylene glycol" series manufactured by FUJIFILM Wako Pure Chemical Corp. Examples of the polyvalent hydroxy compound having an ionic structure include polyols having a carboxyl structure, such as 2,2'-dimethylolpropionic acid, 2,2'-dimethylolbutanoic acid, 2,2'-dimethylolbutyric acid, and 2,2'-dimethylolvaleric acid, and polyols having a sulfonic acid structure, such as 5-sulfoisophthalic acid, sulfoterephthalic acid, 4-sulfophthalic acid, and 5[4-sulfophenoxy]isophthalic acid.

[Production conditions for water-dispersible polyol]

For the production of the water-dispersible polyol of the present embodiment, a transesterification reaction catalyst can be used.
Examples of the transesterification reaction catalyst include, but are not particularly limited to, alkali metals and alkaline earth metals, and alcoholates thereof, hydrides thereof, oxides thereof, amides thereof, hydroxides thereof and salts thereof.
Examples of the salts of the alkali metal and the alkaline earth metal include, but are not particularly limited to, carbonate, nitrogen-containing borate, and basic salts with organic acids.
Examples of the alkali metal include, but are not particularly limited to, lithium, sodium, and potassium.
Examples of the alkaline earth metal include, but are not particularly limited to, magnesium, calcium, strontium, and barium.
Examples of the transesterification catalyst using a metal other than alkali metals and alkaline earth metals include, but are not particularly limited to, metals other than alkali metals and alkaline earth metals, and salts thereof, alcoholates thereof, and organic compounds containing the metals.
Examples of the metal other than alkali metals and alkaline earth metals include, but are not particularly limited to, aluminum, titanium, vanadium, chromium, manganese, iron, cobalt, nickel, copper, zinc, gallium, germanium, zirconium, niobium, molybdenum, ruthenium, rhodium, palladium, silver, indium, tin, antimony, tungsten, rhenium, osmium, iridium, platinum, gold, thallium, lead, bismuth, and ytterbium.
One of these transesterification catalysts can be used alone, or two or more thereof can be used in combination.
Among others, the transesterification reaction catalyst is preferably at least one metal selected from the group consisting of lithium, sodium, potassium, magnesium, calcium, titanium, manganese, zirconium, tin, lead and ytterbium, or a salt thereof, an alkoxide thereof, or an organic compound containing the metal, more preferably at least one metal selected from the group consisting of lithium, magnesium, calcium, titanium, manganese, ytterbium, tin, zinc and zirconium, further preferably at least one metal selected from the group consisting of lithium, magnesium, calcium, titanium, manganese and ytterbium, still further preferably at least one metal selected from the group consisting of lithium, magnesium, calcium, titanium and manganese, particularly preferably at least one metal selected from the group consisting of lithium, calcium, titanium and manganese, more particularly preferably at least one metal selected from the group consisting of lithium, titanium and manganese, more particularly preferably at least one metal selected from the group consisting of titanium and manganese, because transesterification reaction to obtain the water-dispersible polyol is more favorably performed, and use of the aqueous composition comprising the water-dispersible polyol has less influence on urethane reaction.
Examples of the preferred transesterification catalyst include organic compounds of titanium, organic compounds of magnesium, organic compounds of zinc, organic compounds of ytterbium, organic compounds of zirconium, and organic compounds of manganese.
Examples of the organic compound of titanium include, but are not particularly limited to, titanium tetra-n-butoxide, titanium tetra-n-propoxide, and titanium tetraisopropoxide.
Examples of the organic compound of magnesium include, but are not particularly limited to, magnesium acetate, magnesium(II) acetylacetonate, and 2,2,6,6-tetramethyl-3,5-heptanedionatomagnesium(II) dihydrate.
Examples of the organic compound of zinc include, but are not particularly limited to, zinc acetate, zinc(II) acetylacetonate, and 2,2,6,6-tetramethyl-3,5-heptanedionatozinc(II) .
Examples of the organic compound of ytterbium include, but are not particularly limited to, ytterbium(III) isopropoxide, ytterbium(III) trifluoromethanesulfonate, tris(cyclopentadienyl)ytterbium(III), and acetylacetonatoytterbium(III) hydrate.
Examples of the organic compound of zirconium include, but are not particularly limited to, zirconium(IV) acetylacetone, zirconium(IV) tetrapropoxide, zirconium(IV) tetrabutoxide, and zirconium(IV) acetylacetonate.
Examples of the organic compound of manganese include, but are not particularly limited to, manganese(II)

acetate and manganese(II) acetylacetonate.

The lower limit of the amount of the transesterification reaction catalyst used is preferably 0.00001% by mass or more, more preferably 0.0001% by mass or more, based on the total mass of the starting materials. The upper limit thereof is preferably 0.1% by mass or less, more preferably 0.05% by mass or less, further preferably 0.025% by mass or less, still further preferably 0.015% by mass or less, particularly preferably 0.01% by mass or less.

Specifically, the transesterification reaction can be carried out by mixing starting materials, and stirring the mixture under heating.

The temperature of the transesterification reaction is not particularly limited and is preferably 80°C or higher, more preferably 100°C or higher, further preferably 120°C or higher, still further preferably 140°C or higher, in terms of the lower limit and preferably 250°C or lower, more preferably 220°C or lower, further preferably 200°C or lower, still further preferably 180°C or lower, in terms of the upper limit.

When the reaction temperature is equal to or higher than the lower limit value described above, the transesterification reaction can be performed in a shorter time, leading to excellent cost efficiency. When the reaction temperature is equal to or lower than the upper limit value described above, the chromaticity of the resulting water-dispersible polyol as well as the design of a urethane cured product obtained using the aqueous composition comprising the water-dispersible polyol tends to be much superior.

The reaction pressure of the transesterification reaction is not particularly limited and is preferably atmospheric pressure or higher and 1 MPa or lower. When the reaction pressure falls within the range described above, the reaction can be more conveniently carried out. In the case of using an auxiliary material, the transesterification reaction can be more efficiently accelerated at a pressure increased to some extent in consideration of vapor pressure thereof, etc.

The progression and completion of the transesterification reaction can be confirmed by GPC measurement and/or NMR measurement. As the transesterification reaction progresses, the disappearance of a peak derived from the starting material and/or the appearance of a peak derived from a product can be confirmed.

In the method for producing the water-dispersible polyol, for example, the step of dehydrating the starting materials used may be performed as pretreatment before the transesterification reaction described above.

In the method for producing the water-dispersible polyol, for example, the step of adding the aforementioned catalyst poison for the transesterification reaction catalyst may be performed as aftertreatment after the transesterification reaction described above.

[Polycarbonate polyol]

The polycarbonate polyol for use in producing the water-dispersible polycarbonate polyol of the present embodiment is not particularly limited and can be obtained by a method for producing a polycarbonate polyol mentioned later. Alternatively, a commercially available product may be used. Examples thereof include, but are not particularly limited to, "DURANOL (trade name)" series T6002, T5652, T5651, T5650J, T5650E, T4692, T4691, G4672, T4671, G3452, G3450J, GE502, and GE501 manufactured by Asahi Kasei Corp.

[Method for producing polycarbonate polyol]

A method for producing the polycarbonate polyol for use in the production of the water-dispersible polyol of the present embodiment is not particularly limited, and a method known in the art may be adopted. The polycarbonate polyol can be obtained, for example, through the reaction of a carbonate compound with a polyvalent hydroxy compound in the presence of a transesterification catalyst.

(Carbonate compound)

Examples of the carbonate compound for use in the production of the polycarbonate polyol include, but are not limited to, alkylene carbonate, dialkyl carbonate, and diaryl carbonate.

Examples of the alkylene carbonate include, but are not particularly limited to, ethylene carbonate, trimethylene carbonate, 1,2-propylene carbonate, 1,2-butylene carbonate, 1,3-butylene carbonate, and 1,2-pentylene carbonate.

Examples of the dialkyl carbonate include, but are not particularly limited to, dimethyl carbonate, diethyl carbonate, dipropyl carbonate, and dibutyl carbonate.

Examples of the diaryl carbonate include, but are not particularly limited to, diphenyl carbonate.

Among others, the carbonate compound for use in the production of the polycarbonate polyol is preferably dimethyl carbonate, diethyl carbonate, ethylene carbonate, or diphenyl carbonate, more preferably dimethyl carbonate, ethylene carbonate, or diphenyl carbonate, further preferably ethylene carbonate or diphenyl carbonate, still further preferably ethylene carbonate.

(Polyvalent hydroxy compound)

Examples of the polyvalent hydroxy compound for use in the production of the polycarbonate polyol include, but are not limited to, linear polyvalent hydroxy compounds, branched polyvalent hydroxy compounds, cyclic polyvalent hydroxy compounds, and polyvalent hydroxy compounds having an aromatic ring.

Examples of the linear polyvalent hydroxy compounds include, but are not particularly limited to, ethylene glycol, 1,3-propanediol, 1,4-butanediol, 1,5-pentanediol, 1,6-hexanediol, 1,7-heptanediol, 1,8-octanediol, 1,9-nonanediol, 1,10-decanediol, 1,11-undecanediol, 1,12-dodecanediol, diethylene glycol, triethylene glycol, polyethylene glycol, and polytetraethylene glycol.

Examples of the branched polyvalent hydroxy compound include, but are not particularly limited to, 2-methyl-1,8-octanediol, neopentyl glycol, 2-ethyl-1,6-hexanediol, 2-methyl-1,3-propanediol, 3-methyl-1,5-pentanediol, 2,4-dimethyl-1,5-pentanediol, 2,4-diethyl-1,5-pentanediol, trimethylolpropane, pentaerythritol, and polypropylene glycol.

Examples of the cyclic polyvalent hydroxy compound include, but are not particularly limited to, 1,3-cyclohexanediol, 1,4-cyclohexanediol, 1,4-cyclohexanedimethanol, and 2-bis(4-hydroxycyclohexyl)-propane isosorbide.

(Production conditions for polycarbonate polyol)

For the production of the polycarbonate polyol, a transesterification reaction catalyst can be used.

Examples of the transesterification reaction catalyst include, but are not particularly limited to, alkali metals and alkaline earth metals, and alcoholates thereof, hydrides thereof, oxides thereof, amides thereof, hydroxides thereof and salts thereof.

Examples of the salts of the alkali metal and the alkaline earth metal include, but are not particularly limited to, carbonate, nitrogen-containing borate, and basic salts with organic acids.

Examples of the alkali metal include, but are not particularly limited to, lithium, sodium, and potassium.

Examples of the alkaline earth metal include, but are not particularly limited to, magnesium, calcium, strontium, and barium.

Examples of the transesterification catalyst using a metal other than alkali metals and alkaline earth metals include, but are not particularly limited to, metals other than alkali metals and alkaline earth metals, and salts thereof, alcoholates thereof, and organic compounds containing the metals.

Examples of the metal other than alkali metals and alkaline earth metals include, but are not particularly limited to, aluminum, titanium, vanadium, chromium, manganese, iron, cobalt, nickel, copper, zinc, gallium, germanium, zirconium, niobium, molybdenum, ruthenium, rhodium, palladium, silver, indium, tin, antimony, tungsten, rhenium, osmium, iridium, platinum, gold, thallium, lead, bismuth, and ytterbium.

One of these transesterification catalysts can be used alone, or two or more thereof can be used in combination.

Among others, the transesterification reaction catalyst is preferably at least one metal selected from the group consisting of lithium, sodium, potassium, magnesium, calcium, titanium, manganese, zirconium, tin, lead and ytterbium, or a salt thereof, an alkoxide thereof, or an organic compound containing the metal, more preferably at least one metal selected from the group consisting of lithium, magnesium, calcium, titanium, manganese, ytterbium, tin, zinc and zirconium, further preferably at least one metal selected from the group consisting of lithium, magnesium, calcium, titanium, manganese and ytterbium, still further preferably at least one metal selected from the group consisting of lithium, magnesium, calcium, titanium and manganese, particularly preferably at least one metal selected from the group consisting of lithium, calcium, titanium and manganese, more particularly preferably at least one metal selected from the group consisting of lithium, titanium and manganese, more particularly preferably at least one metal selected from the group consisting of titanium and manganese, because transesterification reaction to obtain the polycarbonate polyol is more favorably performed, and transesterification reaction is more favorably performed in the production of the water-dispersible polyol using the resulting polycarbonate polyol.

Examples of the preferred transesterification catalyst include organic compounds of titanium, organic compounds of magnesium, organic compounds of zinc, organic compounds of ytterbium, organic compounds of zirconium, and organic compounds of manganese.

Examples of the organic compound of titanium include, but are not particularly limited to, titanium tetra-n-butoxide, titanium tetra-n-propoxide, and titanium tetraisopropoxide.

Examples of the organic compound of magnesium include, but are not particularly limited to, magnesium acetate, magnesium(II) acetylacetonate, and 2,2,6,6-tetramethyl-3,5-heptanedionatomagnesium(II) dihydrate.

Examples of the organic compound of zinc include, but are not particularly limited to, zinc acetate, zinc(II) acetylacetonate, and 2,2,6,6-tetramethyl-3,5-heptanedionatozinc(II).

Examples of the organic compound of ytterbium include, but are not particularly limited to, ytterbium(III) isopropoxide, ytterbium(III) trifluoromethanesulfonate, tris(cyclopentadienyl)ytterbium(III), and acetylacetonatoytterbium(III) hydrate.

Examples of the organic compound of zirconium include, but are not particularly limited to, zirconium(IV) acetylacetone, zirconium(IV) tetrapropoxide, zirconium(IV) tetrabutoxide, and zirconium(IV) acetylacetonate.

Examples of the organic compound of manganese include, but are not particularly limited to, manganese(II) acetate and manganese(II) acetylacetonate.

The lower limit of the amount of the transesterification reaction catalyst used is preferably 0.00001% by mass or more, more preferably 0.0001% by mass or more, based on the total mass of the starting materials. The upper limit thereof is preferably 0.1% by mass or less, more preferably 0.05% by mass or less, further preferably 0.025% by mass or less, still further preferably 0.015% by mass or less, particularly preferably 0.01% by mass or less.

The transesterification catalyst used in transesterification reaction is not consumed by the transesterification reaction when heat treatment is performed subsequently to the production of the polycarbonate polyol. Therefore, its amount can be calculated on the basis of the amount of the transesterification reaction catalyst used. In the case of using, for example, commercially available polycarbonate polyol, the amount of a metal of the transesterification reaction catalyst contained in the polycarbonate polyol is determined by ICP (inductively coupled plasma) measurement.

The polycarbonate polyol used in the present embodiment may be produced through the transesterification reaction of a polycarbonate polyol with a diol compound, or two or more types of polycarbonate polyols.

When the starting material polycarbonate polyol contains a catalyst poison for the transesterification reaction catalyst, etc. used in the production thereof, transesterification reaction usually tends to be less likely to progress. Hence, for the production of the polycarbonate polyol, the transesterification reaction catalyst described above can be newly added in a necessary amount.

On the other hand, when the starting material polycarbonate polyol contains no catalyst poison for the transesterification reaction catalyst, the transesterification reaction according to the present embodiment usually tends to be more likely to progress. However, in the case of, for example, further lowering a reaction temperature or further shortening a reaction time in the process of producing the polycarbonate polyol, the transesterification reaction catalyst can also be newly added in a necessary amount. In this case, the same transesterification reaction catalyst as that used in the production of the starting material polycarbonate polyol can be adopted.

Specifically, the transesterification reaction can be carried out by mixing starting materials, and stirring the mixture under heating.

The temperature of the transesterification reaction is not particularly limited and is preferably 80°C or higher, more preferably 100°C or higher, further preferably 120°C or higher, still further preferably 140°C or higher, in terms of the lower limit and preferably 250°C or lower, more preferably 220°C or lower, further preferably 200°C or lower, still further preferably 180°C or lower, in terms of the upper limit.

When the reaction temperature is equal to or higher than the lower limit value described above, the transesterification reaction can be performed in a shorter time, leading to excellent cost efficiency. When the reaction temperature is equal to or lower than the upper limit value described above, the resulting polycarbonate polyol can be more effectively prevented from being stained.

The reaction pressure of the transesterification reaction is not particularly limited and is preferably atmospheric pressure or higher and 1 MPa or lower. When the reaction pressure falls within the range described above, the reaction can be more conveniently carried out. In the case of using an auxiliary material, the transesterification reaction can be more efficiently accelerated at a pressure increased to some extent in consideration of vapor pressure thereof, etc.

The progression and completion of the transesterification reaction can be confirmed by GPC measurement and/or NMR measurement. As the transesterification reaction progresses, the disappearance of a peak derived from the starting material and/or the appearance of a peak derived from a product can be confirmed.

In the method for producing the polycarbonate polyol, for example, the step of dehydrating the starting materials used may be performed as pretreatment before the transesterification reaction described above.

In the method for producing the polycarbonate polyol, for example, the step of adding the aforementioned catalyst poison for the transesterification reaction catalyst may be performed as aftertreatment after the transesterification reaction described above.

[Component (B): aqueous polyurethane]

The aqueous polyurethane of the present embodiment has a hydrophilic group.

The aqueous polyurethane of the present embodiment is not particularly limited and can be obtained by, for example, a method for producing the aqueous polyurethane mentioned later. Alternatively, a commercially available product may be used. Examples thereof include, but are not particularly limited to, "DAOTAN (trade name)" series such as VTW-6425, VTW-6450, VTW-6463, and VTW-6466 manufactured by Daicel-Allnex Ltd.

(Hydrophilic group)

Examples of the hydrophilic group of the aqueous polyurethane of the present embodiment include, but are not particularly limited to, nonionic groups, anionic groups, and cationic groups. Among them, a nonionic group and an anionic group are preferred from the viewpoint of versatility. Specific examples of the nonionic group include, but are not particularly limited to, an oxyethylene group and a polyoxyethylene group. Specific examples of the anionic group include, but are not particularly limited to, a sulfonic acid group and a carboxyl group.
The lower limit of the content of the hydrophilic group in the aqueous polyurethane is not particularly limited. Preferably, the hydrophilic group is contained so as to attain an average particle size of 500 nm or smaller in particle size measurement described in Examples mentioned later.

(Average particle size)

The lower limit of the average particle size of the aqueous polyurethane of the present embodiment is preferably 5 nm or larger, more preferably 10 nm or larger, further preferably 15 nm or larger, still further preferably 20 nm or larger, particularly preferably 25 nm or larger, extremely preferably 30 nm or larger. The upper limit thereof is preferably 500 nm or smaller, more preferably 400 nm or smaller, further preferably 350 nm or smaller, still further preferably 300 nm or smaller, particularly preferably 250 nm or smaller, extremely preferably 200 nm or smaller. The lower limit and the upper limit may be appropriately combined to define a numeric range. The range of the average particle size may be, for example, 5 to 500 nm, 10 to 400 nm, 15 to 350 nm, 20 to 350 nm, 25 to 200 nm, or 30 to 250 nm. When the average particle size of the aqueous polyurethane falls within the range described above, the water dispersion stability of the aqueous polyurethane as well as the endurance of a urethane cured product obtained using the aqueous composition comprising the aqueous polyurethane tends to be better.

(Weight-average molecular weight (Mw))

The lower limit of the weight-average molecular weight (Mw) of the aqueous polyurethane of the present embodiment is preferably 10000 or higher, more preferably 15000 or higher, further preferably 20000 or higher, still further preferably 25000 or higher, particularly preferably 30000 or higher, more particularly preferably 35000 or higher, extremely preferably 40000 or higher. The upper limit of the weight-average molecular weight (Mw) of the aqueous polyurethane of the present embodiment is preferably 300000 or lower, more preferably 280000 or lower, further preferably 250000 or lower, still further preferably 220000 or lower, particularly preferably 200000 or lower, more particularly preferably 180000 or lower, extremely preferably 160000 or lower, more extremely preferably 150000 or lower. The lower limit and the upper limit may be appropriately combined to define a numeric range. The weight-average molecular weight (Mw) may be, for example, 10000 to 300000, 15000 to 250000, 20000 to 220000, 25000 to 200000, 30000 to 180000, 35000 to 160000, or 40000 to 150000.
When the weight-average molecular weight (Mw) falls within the range described above, a urethane cured product obtained using the aqueous composition comprising the aqueous polyurethane tend to have better endurance.
Examples of the method for controlling the weight-average molecular weight (Mw) of the aqueous polyurethane of the present embodiment within the range described above include, but are not particularly limited to, a method of preparing a chain extender to be added in a chain extension step such that the weight-average molecular weight (Mw) falls within the range described above in the production of the aqueous polyurethane, and the purchase of a commercially available product within the range described above.
In the present embodiment, the weight-average molecular weight (Mw) of the aqueous polyurethane can be calculated by GPC measurement (DMF) described in Examples mentioned later.

(Functional group)

The aqueous polyurethane preferably comprises at least one selected from the group consisting of an ether group, an ester group, and a carbonate group, more preferably comprises at least one selected from the group consisting of an ester group and a carbonate group, and further preferably comprises a carbonate group, from the viewpoint of the flexibility and endurance of a urethane cured product obtained using the aqueous composition comprising the aqueous polyurethane.
In the present embodiment, the functional group of the aqueous polyurethane can be confirmed from the structures of starting materials or by NMR measurement, FT-IR measurement, GC-MS measurement, LC-MS measurement, or the like.

(Cyclic structure)

The aqueous polyurethane preferably has a cyclic structure, more preferably has an alicyclic structure, and further preferably has an alicyclic structure derived from isophorone diisocyanate and/or dicyclohexylmethane diisocyanate, from the viewpoint of the endurance of a urethane cured product obtained using the aqueous composition comprising the aqueous polyurethane.

[Method for producing aqueous polyurethane]

The method for producing the aqueous polyurethane of the present embodiment is not particularly limited, and a method known in the art may be adopted. The aqueous polyurethane can be produced, for example, through the step of producing a urethane prepolymer having a terminal isocyanate group through the reaction of a polyol, a polyisocyanate, and a hydrophilic group-containing compound (prepolymer step), and the step of reacting the urethane prepolymer with a chain extender (chain extension step).

(Polyol)

Examples of the polyol for use in the production of the aqueous polyurethane include, but are not limited to, the polycarbonate polyols mentioned above and polyester polyol, acrylic polyol, polyether polyol, polyolefin polyol, and fluorine polyol described in Japanese Patent Laid-Open No. 2018-012769, one of which can be used alone or two or more of which can be used in combination.

Among them, polycarbonate polyol, polyester polyol, polyether polyol, and fluorine polyol are preferred, polycarbonate polyol, polyester polyol, and polyether polyol are more preferred, polycarbonate polyol and polyester polyol are further preferred, and polycarbonate polyol is still further preferred, from the viewpoint of the flexibility and endurance of a urethane cured product obtained using the aqueous composition comprising the aqueous polyurethane.

(Polyisocyanate)

Examples of the polyisocyanate for use in the production of the aqueous polyurethane include, but are not limited to, aromatic polyisocyanates such as phenylene diisocyanate, tolylene diisocyanate, diphenylmethane diisocyanate, naphthalene diisocyanate, polymethylene polyphenyl polyisocyanate, and carbodiimidized diphenylmethane polyisocyanate, and polyisocyanates having an aliphatic or alicyclic structure, such as hexamethylene diisocyanate, lysine diisocyanate, cyclohexane diisocyanate, isophorone diisocyanate, dicyclohexylmethane diisocyanate, xylylene diisocyanate, tetramethylxylylene diisocyanate, dimeric acid diisocyanate, and norbornene diisocyanate, one of which can be used alone or two or more of which can be used in combination.

Among them, a polyisocyanate having an alicyclic structure is preferably used, and isophorone diisocyanate or dicyclohexylmethane diisocyanate is more preferably used, from the viewpoint of the endurance of a urethane cured product obtained using the aqueous composition comprising the aqueous polyurethane.

(Hydrophilic group-containing compound)

Examples of the hydrophilic group-containing compound for use in the production of the aqueous polyurethane include, but are not limited to, polyols having a carboxyl group, such as 2,2'-dimethylolpropionic acid, 2,2'-dimethylolbutanoic acid, 2,2'-dimethylolbutyric acid, and 2,2'-dimethylolvaleric acid, and polyols having a sulfonic acid group, such as 5-sulfoisophthalic acid, sulfoterephthalic acid, 4-sulfophthalic acid, and 5[4-sulfophenoxy]isophthalic acid, one of which can be used alone or two or more of which can be used in combination.

(Chain extender)

Examples of the chain extender for use in the production of the aqueous polyurethane include, but are not limited to, diamines such as ethylenediamine, 1,2-propanediamine, 1,6-hexamethylenediamine, piperazine, 2,5-dimethylpiperazine, isophoronediamine, 4,4'-dicyclohexylmethanediamine, 3,3'-dimethyl-4,4'-dicyclohexylmethanediamine, and 1,4-cyclohexanediamine; diamines containing one primary amino group and one secondary amino group, such as N-hydroxymethylaminoethylamine, N-hydroxyethylaminoethylamine, N-hydroxypropylaminopropylamine, N-ethylaminoethylamine, and N-methylaminopropylamine; polyamines such as diethylenetriamine, dipropylenetriamine, and triethylenetetramine; hydrazines such as hydrazine, N,N'-dimethylhydrazine, and 1,6-hexamethylenebishydrazine; dihydrazides such as succinic acid dihydrazide, adipic acid dihydrazide, glutaric acid dihydrazide, sebacic acid dihydrazide, and isophthalic acid dihydrazide; and semicarbazides such as β-semicarbazidopropionic acid hydrazide, 3-semicarbazido-propyl-carbazic acid ester, and semicarbazido-3-semicarbazidomethyl-3,5,5-trimethylcyclohexane, one of which can be used alone or two or more of which can be used in combination.

(Organic solvent)

An organic solvent may be used, if necessary, in the prepolymer step in producing the aqueous polyurethane. Examples of the organic solvent that may be used in the prepolymer step include ketones such as acetone and methyl ethyl ketone; ethers such as tetrahydrofuran and dioxane; acetic acid esters such as ethyl acetate and butyl acetate; nitriles such as acetonitrile; and amides such as dimethylformamide and N-methylpyrrolidone, one of which can be used alone or two or more of which can be used in combination.

[Component (C): curing agent]

The aqueous composition of the present embodiment may further contain a curing agent (component (C)) in addition to the water-dispersible polyol (component (A)) described above and the aqueous polyurethane (component

(B)) described above.

The curing agent (component (C)) is not particularly limited as long as the curing agent has a reactive group capable of reacting with a hydroxy group of the water-dispersible polyol (component (A)) and/or a terminal group of the aqueous polyurethane (component (B)) and/or a hydrophilic group. A curing agent having two or more reactive groups is preferably used.

Examples of the compound having such a reactive group include isocyanate compounds, carbodiimide compounds, and aziridine compounds. Among them, an isocyanate compound is preferred.

A commercially available isocyanate compound may be used, or the isocyanate compound may be synthesized by use of a method known in the art.

Examples of the commercially available product of the isocyanate compound include "DURANATE (trade name)" series manufactured by Asahi Kasei Corp., such as 24A-100, 22A-75P, TPA-100, TKA-100, P301-75E, D101, D201, 21S-75E, MFA-75B, MHG-80B, TUL-100, TLA-100, TSA-100, TSS-100, TSE-100, E402-80B, E405-80B, AE700-100, A201H, 17B-60P, TPA-B80E, MF-B60B, MF-K60B, SBB-70P, SBN-70D, E402-B80B, WB40-100, WT30-100, WT31-100, WB40-80D, WT20-100, WL70-100, WE50-100, and WM44-L70G, and the polyisocyanates mentioned above.

(NCO/OH ratio)

In the case of using an isocyanate compound as the curing agent, the content of the isocyanate compound in the aqueous composition is preferably 0.2 to 7.0, more preferably 0.5 to 5.0, further preferably 0.8 to 3.0, still further preferably 0.8 to 2.5, particularly preferably 0.8 to 2.0, in terms of the ratio of the molar number of an isocyanate group (NCO group) contained in the component (C) to the molar number of a hydroxy group (OH group) contained in the component (A) and the molar number of a hydroxy group (OH group) contained in the component (B) (the molar number of a NCO group/ the molar number of OH groups) from the viewpoint of the endurance of a urethane cured product obtained using the aqueous composition.

The curing agent preferably has a cyclic structure, and more preferably has an isocyanurate ring, from the viewpoint of the endurance of a urethane cured product.

[Curable composition]

The curable composition of the present embodiment comprises the aqueous composition mentioned above. Examples of the curable composition include coating materials, polyurethane, and coating agents comprising the aqueous composition mentioned above. The curable composition of the present embodiment comprising the aqueous composition mentioned above tends to be excellent in shortening of a drying step, and thinning of a cured product, flexibility, and high endurance.

The curable composition of the present embodiment may comprise other components in addition to the aqueous composition mentioned above. Examples of other components include, but are not particularly limited to, polyhydric alcohol compounds, water-dispersible polyester polyols, acrylic polyol emulsions, and water-dispersible polyols such as water-dispersible polyether polyols, water-dispersible polyolefin polyols, and water-dispersible fluorine polyols.

The curable composition of the present embodiment can be supplemented with other additives, for example, a curing accelerator (catalyst), a flatting agent, an antisettling agent, a leveling agent, a filler, a dispersant, a flame

retardant, a dye, an organic or inorganic pigment, a mold release agent, a rheology modifier, a plasticizer, an antioxidant, an ultraviolet absorber, a light stabilizer, an antifoaming agent, a colorant, and a solvent, according to various purposes, in addition to those described above. Curable compositions differing in properties, such as a soft-feel coating material and a clear coating material, can be obtained by appropriately containing these other additives.

[Urethane cured product]

The urethane cured product of the present embodiment is obtained by curing the curable composition mentioned above. Examples of the urethane cured product include urethane coating films, urethane films, and urethane resins. The urethane cured product of the present embodiment obtained from the curable composition mentioned above tends to be excellent in flexibility and high endurance.

Examples

Hereinafter, the present embodiment will be further specifically described with reference to specific Examples and Comparative Examples. However, the present embodiment is not limited by these Examples and Comparative Examples by any means without departing from the spirit thereof. Evaluation and physical properties in Examples and Comparative Examples mentioned later are made or measured by methods given below. In the present Examples, the terms "part" and "%" are based on mass, unless otherwise specified.

[Measurement of hydroxy value (OHV)]

The hydroxy value was measured by the following method.

A volumetric flask was used, and pyridine was added to 12.5 g of acetic anhydride so as to bring the amount to 50 mL, to prepare an acetylation reagent. In a 100 mL eggplant-shaped flask, 1.0 to 10.0 g of a sample was weighed. To the eggplant-shaped flask, 5 mL of the acetylation reagent and 10 mL of toluene were added with a whole pipette to obtain a solution. Then, a condenser was attached to the eggplant-shaped flask, and the solution was stirred and heated at 100°C for 1 hour. To the eggplant-shaped flask, 2.5 mL of distilled water was added with a whole pipette, and the obtained solution was further heated and stirred for 10 minutes. After cooling of the solution for 2 to 3 minutes, to the eggplant-shaped flask, 12.5 mL of ethanol was added, and 2 to 3 drops of phenolphthalein were added as an indicator, followed by titration with 0.5 mol/L ethanolic potassium hydroxide. Subsequently, in a 100 mL eggplant-shaped flask, 5 mL of the acetylation reagent, 10 mL of toluene and 2.5 mL of distilled water were placed, and heated and stirred for 10 minutes, followed by titration of the obtained solution in the same way as above (blank test). On the basis of the results, the hydroxy value was calculated according to the following expression (III):

$$\text{Hydroxy value (mg-KOH/g)} = \{(b - a) \times 28.05 \times f\} / e \quad \ldots \text{(III)}$$

wherein a represents the amount of the sample titrated (mL); b represents the amount titrated (mL) in the blank test; e represents the amount of the sample (g); and f represents the factor of the titration solution.

[GPC measurement (THF)]

The number-average molecular weight (Mn) and weight-average molecular weight (Mw) of a water-dispersible polyol were measured by GPC measurement (THF) in accordance with the following method.

A water-dispersible polyol obtained in each of Synthesis Examples mentioned later was used as a sample. The concentration of the measurement sample was adjusted to 0.5% by mass with tetrahydrofuran (hereinafter, referred to as THF). The number-average molecular weight (Mn) and weight-average molecular weight (Mw) based on standard polystyrene were measured using a GPC apparatus given below.

GPC apparatus: HLC-8320 manufactured by Tosoh Corp. Analytical column: One column of TSKgel G4000H

One column of G3000H
Two columns of G2000H

Guard column: TSKgel guard column $H_{XL}$-H

Reference column: TSKgel SuperH-RC
Eluent: Tetrahydrofuran (THF)
Flow rate: 1.0 mL/min
Column temperature: 40°C
RI detector: RI (apparatus: built-in HLC-8320)
Calibration curve: Standard polystyrene

(manufactured by Tosoh Corp.)

- F-40 (molecular weight: $4.27 \times 10^5$)
- F-20 (molecular weight: $1.90 \times 10^5$)
- F-10 (molecular weight: $9.64 \times 10^4$)
- F-4 (molecular weight: $3.79 \times 10^4$)
- F-2 (molecular weight: $1.81 \times 10^4$)
- F-1 (molecular weight: $1.02 \times 10^4$)
- A-5000 (molecular weight: $5.97 \times 10^3$)
- A-2500 (molecular weight: $2.63 \times 10^3$)
- A-500
- A-1000

The molecular weights of a dimer to a decamer were calculated from A-500 and A-1000.

Dimer (molecular weight: 266)
Trimer (molecular weight: 370)
Tetramer (molecular weight: 474)
Pentamer (molecular weight: 578)
Hexamer (molecular weight: 682)
Heptamer (molecular weight: 786)
Octamer (molecular weight: 890)
Nonamer (molecular weight: 994)
Decamer (molecular weight: 1098)
Calibration curve expression: Cubic polynomial

[GPC measurement (DMF)]

The weight-average molecular weight (Mw) of an aqueous polyurethane was measured by GPC measurement (DMF) in accordance with the following method.

An aqueous polyurethane obtained in each of Synthesis Examples mentioned later was used as a sample. The concentration of the measurement sample was adjusted to 0.5% by mass with N,N-dimethylformamide (hereinafter, referred to as DMF). The weight-average molecular weight (Mw) based on standard polystyrene was measured using a GPC apparatus given below.

GPC apparatus: HLC-8320 manufactured by Tosoh Corp. Analytical column: Three columns of TSKgel SuperHM-H
Guard column: TSKgel guard column H-H
Reference column: TSKgel SuperH-RC
Eluent: N,N-Dimethylformamide (DMF)
Flow rate: 0.5 mL/min
Column temperature: 40°C
RI detector: RI (apparatus: built-in HLC-8320)
Calibration curve: Standard polystyrene

(manufactured by Tosoh Corp.)

- F-40 (molecular weight: $4.27 \times 10^5$)
- F-20 (molecular weight: $1.90 \times 10^5$)
- F-10 (molecular weight: $9.64 \times 10^4$)
- F-4 (molecular weight: $3.79 \times 10^4$)
- F-2 (molecular weight: $1.81 \times 10^4$)

- F-1 (molecular weight: $1.02 \times 10^4$)
- A-5000 (molecular weight: $5.97 \times 10^3$)
- A-2500 (molecular weight: $2.63 \times 10^3$)
- A-1000 (molecular weight: $2.63 \times 10^3$)

Calibration curve expression: Cubic polynomial

[Hydrophilic structure]

The operation of [Water dispersibility] mentioned later was carried out to confirm whether a water-dispersible polyol was dispersible in water. When the evaluation results were A or B, the water-dispersible polyol was confirmed to have a hydrophilic structure.

The hydrophilic structure was determined by the following method 1), 2) and/or 3).

1) The hydrophilic structure was determined from the structure of each starting material used.
2) The sample was subjected to mass spectrometry, FT-IR measurement, $^1$H-NMR measurement and/or $^{13}$C-NMR measurement, and the hydrophilic structure was confirmed by identification from each spectrum thus obtained.

The analysis method and the identification were performed with reference to a method known in the art and/or Spectrometric Identification of Organic Compounds (7th ed) (Tokyo Kagaku Dojin).

3) The hydrophilic structure was determined by pyrolysis GC/MS and/or derivatization GC/MS. Specific examples of the analysis method include, but are not particularly limited to, the following methods of

<Pyrolysis GC/MS> and <Derivatization GC/MS>.

<Pyrolysis GC/MS>

Apparatus: Agilent Technology 6890GC/5973MSD
Column: HP-5MS (L: 30 m, I.D.: 0.25 mm, Film thickness: 0.25 μm)
Carrier: Helium
Ionization method: EI
Mass range: m/z 10-800
Oven temperature: 40°C (5 min hold) → (10°C/min) → 320°C (16 min hold)
Injection port temperature: 320°C
Transfer temperature: 320°C
Split ratio: Split 1/50
Amount of sample: 0.1 mg
Pyrolysis temperature: 600°C
Interface temperature: 320°C

<Derivatization GC/MS>

Apparatus: Agilent Technology 7890GC/5977MSD
Column: HP-5MS (L: 30 m, I.D.: 0.25 mm, Film thickness: 0.25 μm)
Carrier: Helium
Ionization method: EI
Mass range: m/z 10-800
Oven temperature: 40°C (5 min hold) → (20°C/min) → 320°C (21 min hold)
Injection port temperature: 320°C
Transfer temperature: 320°C
Split ratio: Split 1/10
Injection volume: 2 μL
Derivatizing agent: BSA (N.O-bis(trimethylsilyl)acetamide)

[Hydrophilic group]

The hydrophilic group of an aqueous polyurethane was determined by the following method 1), 2), and/or 3).

1) The hydrophilic group was determined from the structure of each starting material used.
2) The sample was subjected to mass spectrometry, FT-IR measurement, $^1$H-NMR measurement and/or $^{13}$C-NMR measurement, and the hydrophilic structure was confirmed by identification from each spectrum thus obtained.

The analysis method and the identification were performed with reference to a method known in the art and/or Spectrometric Identification of Organic Compounds (7th ed) (Tokyo Kagaku Dojin).
3) The hydrophilic group was determined by pyrolysis GC/MS and/or derivatization GC/MS. Specific examples of the analysis method include, but are not particularly limited to, the methods of <Pyrolysis GC/MS> and <Derivatization GC/MS> mentioned above.

[Water dispersibility]

A water-dispersible polyol obtained in each of Synthesis Examples mentioned later was used as a sample. An aqueous dispersion obtained by carrying out the following steps 1 and 2 was left standing at 23°C and evaluated according to the criteria given below.
Step 1: A sample and dipropylene glycol monomethyl ether (hereinafter, also abbreviated to "DPM") were weighed into a plastic container such that the solid content of the sample was 70 to 80%. The obtained solution was stirred until uniformly dissolved using a stirrer.
Step 2: Pure water was weighed into the plastic container such that the solid content was 20%. The obtained solution was stirred until evenly dispersed using a stirrer to obtain an aqueous dispersion.

[Evaluation criteria]

A: Dispersed in water for 7 days or longer without precipitates
B: Dispersed in water for 1 day or longer and shorter than 7 days without precipitates
C: Not dispersed in water (precipitates were present) or dispersed in water for less than 1 day

[FT-IR measurement]

A water-dispersible polyol obtained in each of Synthesis Examples mentioned later was used as a sample, and the infrared absorption spectrum absorbance of the sample was measured by FT-IR (Fourier transform infrared spectrometer) in accordance with the method given below to confirm an infrared absorption spectrum absorbance around a wavenumber of 1743 $cm^{-1}$ derived from a carbonate structure.
The method given below can also be applied to a method for confirming the functional group of an aqueous polyurethane.
The measurement sample was thinly spread over a KRS-5 plate (mixed crystals of thallium bromide (TlBr) and thallium iodide (TlI)), and the infrared absorption spectrum absorbance of the sample was measured by FT-IR using the following apparatus and conditions.

Apparatus: FT/IR-4600 type A (JASCO Corp.)
Light source: Standard light source
Detector: TGS
The number of scans: 16
Resolution: 4 $cm^{-1}$
Zero filling: On
Apodization: Cosine
Gain: Auto (2)
Aperture: Auto (7.1 mm)
Scan speed: Auto (2 mm/sec)
Filter: Auto (30000 Hz)
Data type: Equally spaced data
Abscissa: Wavenumber ($cm^{-1}$)

Ordinate: Abs
Start: 400 $cm^{-1}$
End: 40000 $cm^{-1}$

[Particle size measurement]

An aqueous polyurethane obtained in each of Synthesis Examples mentioned later was used as a sample, and the average particle size (D50) of the sample was measured by the following method using a particle size measurement apparatus.

Apparatus: NANOTRAC WAVE II EX-150 (MicrotracBEL Corp.)
Permeability: Permeation
Particle refractive index: 1.81
Shape: Non-spherical
Density ($g/cm^3$): 1.00
Solvent condition: Water
Solvent refractive index: 1.333
Measurement time: 120 sec
The number of measurements: 1
Particle size classification: Standard
Distribution indication: Volume

[Method for preparing coating material]

(Coating material)

The starting materials (aqueous composition, curing agent, catalyst, solvent, hydrophilic solvent, leveling agent, flatting agent and antisettling agent) used were weighed into a plastic container according to the coating material blending conditions given below, and stirred until uniformly dispersed using a stirrer to obtain a coating material.

(Starting material used)

Water-dispersible polyol: Water-dispersible polyol obtained in each of Synthesis Examples mentioned later
Aqueous polyurethane: Aqueous polyurethane obtained in each of Synthesis Examples mentioned later
Curing agent 1: WT31-100 (manufactured by Asahi Kasei Corp., NCO% = 17.4, solid content: 100%)
Curing agent 2: XP2655 (manufactured by Sumika Covestro Urethane Co., Ltd., NCO% = 20.8, solid content: 100%)
Catalyst: Borchers LH10 (manufactured by OMG Borchers GmbH, 1% aqueous catalyst)
Solvent: Pure water
Hydrophilic solvent: DPM
Leveling agent: BYK-331 (manufactured by BYK Additives & Instruments)
Flatting agent: ACEMATT TS 100 (manufactured by Evonik Industries AG)
Antisettling agent: Disparlon AQ-002 (manufactured by Kusumoto Chemicals, Ltd.)

(Blending conditions)

NCO/OH: 1.25

However, when the value of a hydroxy group was 0, NCO/OH was set to 0.00.

Coating material solid content: 25%
Catalyst: 0.3% based on the total amount of resins in the aqueous composition and the curing agent
Leveling agent: 0.3% based on the total amount of resins in the aqueous composition and the curing agent
Flatting agent: 10% based on the total amount of resins in the aqueous composition and the curing agent
Antisettling agent: 0.6% based on the total amount of resins in the aqueous composition and the curing agent

(Preparation method)

A coating material was prepared in accordance with the procedures of the following steps 1 to 3.

Step 1: A water-dispersible polyol and DPM were weighed into a plastic container such that the solid content of the water-dispersible polyol was 70 to 80%. The obtained solution was stirred until uniformly dissolved using a stirrer.

Step 2: Pure water was weighed into the plastic container such that the solid content was 20%. The obtained solution was stirred until evenly dispersed using a stirrer.

Step 3: An aqueous polyurethane was weighed into the plastic container, and the obtained solution was stirred until evenly dispersed using a stirrer to obtain an aqueous composition.

Step 3: A catalyst, a leveling agent, a flatting agent and an antisettling agent were weighed into the plastic container so as to attain the blending conditions mentioned above. The obtained solution was stirred until evenly dispersed using a stirrer.

Step 4: A curing agent 1 and/or a curing agent 2 was weighed into the plastic container so as to attain NCO/OH = 1.25. The obtained solution was stirred until evenly dispersed using a stirrer to obtain a coating material (curable composition).

(Application step)

Each coating material obtained was used, and applied onto a polycarbonate plate ("Takiron PC-1600" (trade name), 2 mm × 70 mm × 150 mm) such that the dry film thickness was a thickness of 40 μm.

[Drying step]

The coating material composition applied onto the polycarbonate plate was baked at 60°C and thereby dried until any finger mark was no longer left on the surface, to obtain a polyurethane coating film. The obtained polyurethane coating film was evaluated for various physical properties by methods mentioned later. The evaluation results are shown in Tables 3 and 4.

[Finger touch drying property evaluation]

In the above-described method for producing a polyurethane coating film, the baking time (drying time) until any finger mark was no longer left on the surface was measured after the application step to evaluate shortening of a drying step.

(Evaluation criteria)

AA: The drying time was shorter than 30 minutes.
A: The drying time was 30 minutes or longer and shorter than 45 minutes.
B: The drying time was 45 minutes or longer and shorter than 60 minutes.
C: The drying time was 60 minutes or longer.

[Soft-feel property evaluation]

After baking until any finger mark was no longer left by the finger touch evaluation, the obtained coating film was cured at 23°C in a 50% RH atmosphere for 1 day, and texture was evaluated according to the criteria given below by touching the surface of the coating film. The soft-feel property evaluation was an index for flexibility.

(Evaluation criteria)

AA: Very good.
A: Good.
B: Slightly good.
C: Poor.

[Chemical resistance test (sunscreen resistance test) level 1]

Sunscreen resistance was evaluated as chemical resistance using a commercially available sunscreen cream.

After baking until any finger mark was no longer left by the finger touch evaluation, the obtained coating film was cured at 23°C in a 50% RH atmosphere for 1 day. Onto the coating film thus cured, a sunscreen agent (Neutrogena Ultra Sheer DRY-TOUCH SUNSCREEN Broad Spectrum SPF 45) was applied so as to attain 0.5 g/9 $cm^2$ on the coating film surface, followed by heating at 55°C for 1 hour. Then, the surface of the coating film was thoroughly washed with a small amount of a neutral detergent to remove the sunscreen agent. The coating film was dried at 23°C in a 50% RH atmosphere on a horizontal table. The obtained coating film was subjected to appearance evaluation given below, and its chemical resistance was evaluated according to the criteria given below. The chemical resistance is an index for endurance.

(Appearance evaluation)

The coating film thus tested was visually observed for the absence of remnants of the sunscreen agent or abnormalities such as swelling or peeling of the coating film and evaluated according to the following criteria.

A: The appearance of the coating film was not changed.
B: The appearance of the coating film was slightly changed.
C: The appearance of the coating film was changed to have swelling and/or remnants.

[Chemical resistance test (sunscreen resistance test) level 2]

Sunscreen resistance was evaluated as chemical resistance using a commercially available sunscreen cream.

After baking until any finger mark was no longer left by the finger touch evaluation, the obtained coating film was cured at 23°C in a 50% RH atmosphere for 1 day. Onto the coating film thus cured, a sunscreen agent (Neutrogena Ultra Sheer DRY-TOUCH SUNSCREEN Broad Spectrum SPF 45) was applied so as to attain 0.5 g/9 $cm^2$ on the coating film surface, followed by heating at 55°C for 4 hours. Then, the surface of the coating film was thoroughly washed with a small amount of a neutral detergent to remove the sunscreen agent. The coating film was dried at 23°C in a 50% RH atmosphere on a horizontal table. The chemical resistance of the obtained coating film was evaluated according to the criteria given below by appearance evaluation. The chemical resistance is an index for endurance.

(Appearance evaluation)

The absence of remnants of the sunscreen agent or abnormalities such as swelling or peeling of the coating film was visually observed in the coating film thus tested. The chemical resistance was evaluated according to the criteria given below.

A: The appearance of the coating film was not changed.
B: The appearance of the coating film was slightly changed.
C: The appearance of the coating film was changed to have swelling and/or remnants.

[Thinning test]

A thinning test was conducted in each of Examples and Comparative Examples given B or higher in the evaluation of the chemical resistance test (sunscreen resistance test) level 2. The same evaluation as in the chemical resistance test (sunscreen resistance test) level 2 was conducted except that the dry film thickness in the application step was decreased by 5 μm from 40 μm to 20 μm. The thinning test results were evaluated according to the criteria given below. A sample given B or higher in the evaluation was confirmed to be capable of being thinned.

(Evaluation criteria)

AA: The dry film thickness that attained B or higher in the appearance evaluation of the chemical resistance test (sunscreen resistance test) level 2 was 25 μm or smaller.
A: The dry film thickness that attained B or higher in the appearance evaluation of the chemical resistance test (sunscreen resistance test) level 2 was 30 μm.

B: The dry film thickness that attained B or higher in the appearance evaluation of the chemical resistance test (sunscreen resistance test) level 2 was 35 μm.
C: The dry film thickness that attained B or higher in the appearance evaluation of the chemical resistance test (sunscreen resistance test) level 2 was 40 μm.

[Moist heat resistance test]

After baking until any finger mark was no longer left by the finger touch evaluation, the obtained coating film was cured at 23°C in a 50% RH atmosphere for 1 day. The coating film thus cured was heated under conditions involving a temperature of 85°C and a humidity of 85% for 10 days in a thermo-hygrostat manufactured by ESPEC Corp. under product name of "PL-1J". The coating film thus tested was observed in accordance with the pencil hardness method of JIS K5600-5-4: 1999 for the presence or absence of a pencil scratch mark remaining on the coating film using a 6B pencil. The moist heat resistance was evaluated according to the criteria given below. The moist heat resistance is an index for endurance.

(Evaluation criteria)

A: No scratch mark was observed.
B: A faint scratch mark was left, but disappeared by tracing with a finger.
C: A scratch mark did not disappear, or peeling of the coating film was observed.

<Method for preparing aqueous polyurethane>

(Starting material used)

Water-dispersible polyol obtained in each of Synthesis Examples, polycarbonate polyol obtained in each of Polymerization Examples, a commercially available product of ether polyol, and/or a commercially available product of ester polyol (hereinafter, also abbreviated to "Polyol")

DMPA (2,2-dimethylolpropionic acid)
Methyl ethyl ketone (MEK)
Dibutyltin dilaurate (DBTDL)
IPDI (isophorone diisocyanate)
Triethylamine (TEA)
Pure water
Ethylenediamine (EDA)

(Amount added)

Polyol, IPDI, DMPA, TEA, and EDA were added so as to attain a molar ratio described in each of Synthesis Examples.
DBTDL was added at 100 ppm based on the total amount of Polyol, IPDI, and DMPA. If necessary, DBTDL can be diluted with toluene for addition (e.g., a 5% solution of DBTDL in toluene).
MEK was added such that the solid content in a prepolymer step was 65%.
Pure water was added such that the final solid content after a MEK removal step was 30%. However, the solid content may be appropriately adjusted by the addition of pure water if viscosity is high in a chain extension step.

(Prepolymer step)

The internal atmosphere of a 1 L separable flask to which a stirrer, a thermometer, a reflux condenser, a nitrogen blowing tube, and a dropping funnel were attached was purged with nitrogen. Polyol, DMPA, DBTDL, and MEK were added to the flask and stirred at 200 rpm for 15 minutes under reflux at 80°C. Subsequently, IPDI was added thereto with a syringe, and the mixture was stirred under reflux at 80°C until NCO% reached 3.5 ± 0.3% by mass to obtain a solution of a terminal isocyanate group-containing urethane prepolymer in MEK. The NCO% is the ratio of the mass of an isocyanate group in polyisocyanate to the total mass of the starting materials used in the prepolymer step.

(Neutralization step and emulsification step)

The obtained urethane prepolymer solution was cooled to 35°C, and TEA was added thereto with stirring at 500 rpm. Subsequently, while the solution was kept at 35°C and the stirring at 500 rpm was continued, pure water was added dropwise thereto at a rate of 10 mL/min to obtain an emulsion (emulsified liquid).

(Chain extension step)

While the obtained emulsion was kept at 35°C and the stirring at 500 rpm was continued, EDA was added thereto for chain extension reaction.

(MEK distillation off step)

Methyl ethyl ketone was distilled off under reduced pressure by the heating of the solution after the chain extension reaction to obtain an aqueous polyurethane solution.

(Solid content measurement)

0.8 to 1.5 g of the obtained aqueous polyurethane solution was precisely weighed into an aluminum cup and heated at 105°C for 3 hours for the removal of volatile components such as water to obtain a urethane resin (nonvolatile component). On the basis of this result, the solid content was calculated according to the following expression (IV).

$$\text{Solid content (\%)} = \{\text{Urethane resin (g)/ Aqueous polyurethane solution (g)}\} \times 100 \quad \text{... (IV)}$$

[Synthesis Example 1]

A 2 L glass flask (hereinafter, also referred to as a "reactor") equipped with a rectifying column packed with a regular packing material, and a stirring apparatus was charged with 458 g of 1,5-pentanediol, 500 g of 1,6-hexanediol, and 760 g of ethylene carbonate. Then, 0.080 g of titanium tetra-n-butoxide was placed therein as a catalyst. While a portion of the distillate was extracted, the mixture was reacted at a reaction temperature of 160 to 175°C for 12 hours. Subsequently, the reactor was connected directly to a condenser. The reaction temperature was raised to 175 to 190°C. Then, the pressure was gradually lowered. While the hydroxy value of the formed polycarbonate polyol was measuring by appropriate sampling, the diol component in the reactor was distilled off to obtain a polycarbonate polyol (865 g) having a hydroxy value of 110.8 mg-KOH/g. To the obtained polycarbonate polyol (865 g), 96 g of polyoxyethylene glycol (manufactured by FUJIFILM Wako Pure Chemical Corp., "Polyethylene Glycol 1000" (trade name)) was added as a starting material forming a nonionic hydrophilic structure, followed by transesterification reaction at 150°C. The progression and completion of the transesterification reaction were determined by subjecting the reaction solution to GPC measurement over time, and thereby confirming the disappearance of peaks derived from the starting materials and the appearance of a peak derived from a product.

Subsequently, the reaction temperature was lowered to 115°C. 0.055 g of 85% phosphoric acid was added thereto, and the mixture was stirred at 115°C for 3 hours to obtain water-dispersible polyol WP-1 having a hydroxy value of 112 mg-KOH/g. The evaluation results are shown in Table 1.

[Synthesis Example 2]

A 1 L glass flask (hereinafter, also referred to as a "reactor") equipped with a rectifying column packed with a regular packing material, and a stirring apparatus was charged with 235 g of 1,4-butanediol, 235 g of 1,6-hexanediol, and 396 g of ethylene carbonate. Then, 0.085 g of titanium tetra-n-butoxide was placed therein as a catalyst. While a portion of the distillate was extracted, the mixture was reacted at a reaction temperature of 150 to 165°C for 20 hours. Subsequently, the reactor was connected directly to a condenser. The reaction temperature was raised to 170 to 180°C. Then, the pressure was gradually lowered. While the hydroxy value of the formed polycarbonate polyol was measured by appropriate sampling, the diol component in the reactor was distilled off to obtain a polycarbonate polyol (365 g) having a hydroxy value of 56.1 mg-KOH/g. To the obtained polycarbonate polyol (365 g), 41 g of polyoxyethylene glycol (manufactured by FUJIFILM Wako Pure Chemical Corp., "Polyethylene Glycol 1000" (trade name)) was added as a starting material forming a nonionic hydrophilic structure, followed by transesterification reaction at 150°C. The progression and completion of the transesterification reaction were determined by subjecting the reaction solution to GPC measurement over time, and thereby confirming the disappearance of peaks derived from the starting materials and the appearance of a peak derived from a product.

Subsequently, the reaction temperature was lowered to 115°C. 0.080 g of dibutyl phosphate was added thereto, and the mixture was stirred at 115°C for 3 hours to obtain water-dispersible polyol WP-2 having a hydroxy value of 61.3 mg-KOH/g. The evaluation results are shown in Table 1.

[Synthesis Example 3]

A 0.3 L glass flask (reactor) equipped with a stirring apparatus was charged with the water-dispersible polyol WP-1 obtained in Synthesis Example 1, and TLA-100 (manufactured by Asahi Kasei Corp., NCO% = 23.3, solid content: 100%, a water-insoluble isocyanate polymer having an isocyanurate ring as a starting material forming a cyclic structure) as an isocyanate compound such that NCO/OH was 0.20 and the amount of the starting materials added was 200 g. Subsequently, the mixture was heated with stirring and reacted at an internal temperature of approximately 120°C in the reactor until a NCO group disappeared to obtain water-dispersible polyol WP-3. The evaluation results are shown in Table 1. The progression of the reaction was confirmed from the disappearance of an infrared absorption spectrum absorbance peak around a wavenumber of 2271 $cm^{-1}$ derived from a NCO group by the FT-IR measurement mentioned above of the reaction solution.

[Synthesis Example 4]

A 0.3 L glass flask (reactor) equipped with a stirring apparatus was charged with the water-dispersible polyol WP-1 obtained in Example 1, and Bayhydur XP2655 (manufactured by Sumika Covestro Urethane Co., Ltd., NCO% = 20.8, solid content: 100%, an anionic water-soluble isocyanate polymer having an isocyanurate ring as a starting material forming a cyclic structure and a sulfone group as a starting material forming an anionic hydrophilic structure) as an isocyanate compound such that NCO/OH was 0.20 and the amount of the starting materials added was 200 g. Subsequently, the mixture was heated with stirring and reacted at an internal temperature of approximately 120°C in the reactor until a NCO group disappeared to obtain water-dispersible polyol WP-4. The evaluation results are shown in Table 1. The progression of the reaction was confirmed from the disappearance of an infrared absorption spectrum absorbancepeak around a wavenumber of 2271 $cm^{-1}$ derived from a NCO group by the FT-IR measurement mentioned above of the reaction solution.

[Polymerization Example 1]

A 2 L glass flask (hereinafter, also referred to as a "reactor") equipped with a rectifying column packed with a regular packing material, and a stirring apparatus was charged with 835 g of 1,3-propanediol, 7 g of 1,6-hexanediol, and 970 g of ethylene carbonate. Then, 0.110 g of titanium tetra-n-butoxide was placed therein as a catalyst. While a portion of the distillate was extracted, the mixture was reacted at a reaction temperature of 160 to 165°C for 24 hours. Subsequently, the reactor was connected directly to a condenser. The reaction temperature was raised to 165 to 175°C. Then, the pressure was gradually lowered. While the hydroxy value of the formed polycarbonate polyol was measured by appropriate sampling, the diol component in the reactor was distilled off to obtain polycarbonate polyol PCP-1 (566 g).

The obtained polycarbonate polyol PCP-1 had a hydroxy value of 58.2 mg-KOH/g.

[Synthesis Example 5]

The polycarbonate polyol PCP-1 obtained in Polymerization Example 1 was used. Polyol, IPDI, DMPA, TEA, and EDA were added so as to attain a molar ratio of Polyol/IPDI/DMPA/TEA/EDA = 1.00/3.00/1.00/1.00/0.50. Aqueous polyurethane PUD-1 was obtained by the method mentioned above. The evaluation results are shown in Table 2.

[Synthesis Example 6]

The water-dispersible polyol WP-1 obtained in Synthesis Example 1 was used. Polyol, IPDI, DMPA, TEA, and EDA were added so as to attain a molar ratio of Polyol/IPDI/DMPA/TEA/EDA = 1.00/2.63/0.63/0.63/0.80. Aqueous polyurethane PUD-2 was obtained by the method mentioned above. The evaluation results are shown in Table 2.

[Synthesis Example 7]

The water-dispersible polyol WP-3 obtained in Synthesis Example 3 was used. Polyol, IPDI, DMPA, TEA, and

EDA were added so as to attain a molar ratio of Polyol/IPDI/DMPA/TEA/EDA = 1.00/2.74/0.74/0.74/0.60. Aqueous polyurethane PUD-3 was obtained by the method mentioned above. The evaluation results are shown in Table 2.

[Synthesis Example 8]

PTMG2000 (trade name, polytetramethylene ether glycol, number-average molecular weight: approximately 2000) manufactured by Mitsubishi Chemical Corp. was used as a commercially available product of ether polyol. Polyol, IPDI, DMPA, TEA, and EDA were added so as to attain a molar ratio of Polyol/IPDI/DMPA/TEA/EDA = 1.00/3.00/1.00/1.00/0.50. Aqueous polyurethane PUD-4 was obtained by the method mentioned above. The evaluation results are shown in Table 2.

[Synthesis Example 9]

P-2030 (trade name, poly-3-methyl-1,5-pentanediol isophthalate, number-average molecular weight: approximately 2000) manufactured by Kurary Co., Ltd. was used as a commercially available product of ester polyol. Polyol, IPDI, DMPA, TEA, and EDA were added so as to attain a molar ratio of Polyol/IPDI/DMPA/TEA/EDA = 1.00/3.00/1.00/1.00/0.50. Aqueous polyurethane PUD-5 was obtained by the method mentioned above. The evaluation results are shown in Table 2.

[Examples 1 to 12]

A water-dispersible polyol (component (A)), an aqueous polyurethane (component (B)), and a curing agent (component (C)) were added as described in Table 3, and a coating material (curable composition) was obtained by the method mentioned above. The evaluation results are shown in Table 3.

[Comparative Examples 1 to 7]

A water-dispersible polyol (component (A)), an aqueous polyurethane (component (B)), and a curing agent (component (C)) were added as described in Table 4, and a coating material (curable composition) was obtained by the method mentioned above. The evaluation results are shown in Table 4.

[Table 1]

Table 1

| | Synthesis Example 1 | Synthesis Example 2 | Synthesis Example 3 | Synthesis Example 4 |
|---|---|---|---|---|
| Hydroxy value (mgKOH/g) | 112.0 | 61.3 | 88.8 | 89.2 |
| Hydrophilic structure | Nonionic | Nonionic | Nonionic | Nonionic and anionic |
| Ratio of carbonate structure represented by formula (I) | 90% | 90% | 84% | 83% |
| Number-average molecular weight (Mn) | 1203 | 2388 | 1894 | 1904 |
| Molecular weight distribution (Mw/Mn) | 2.11 | 2.26 | 3.12 | 3.26 |

[Table 2]

Table 2

| | Synthesis Example 5 | Synthesis Example 6 | Synthesis Example 7 | Synthesis Example 8 | Synthesis Example 9 |
|---|---|---|---|---|---|
| Hydrophilic group | Anionic | Nonionic and anionic | Nonionic and anionic | Anionic | Anionic |
| Weight-average molecular weight (Mw) | 149012 | 74334 | Immeasurable due to insolubility in DMF | 139026 | 166111 |
| Type of cyclic structure | Alicyclic | Alicyclic | Alicyclic and isocyanurate ring | Alicyclic | Alicyclic and aromatic |
| Functional group | Carbonate group | Carbonate group and ether group | Carbonate group and ether group | Ether group | Ester group |
| Average particle size (D50) | 130nm | 54nm | 44nm | 110nm | 150nm |
| Solid content | 30% | 30% | 22% | 30% | 30% |

[Table 3]

Table 3

| | | Example 1 | Example 2 | Example 3 | Example 4 | Example 5 | Example 6 | Example 7 | Example 8 | Example 9 | Example 10 | Example 11 | Example 12 |
|---|---|---|---|---|---|---|---|---|---|---|---|---|---|
| Component (A) | | WP-1 | WP-1 | WP-1 | WP-2 | WP-3 | WP-4 | WP-1 | WP-1 | WP-1 | WP-1 | WP-1 | WP-1 |
| Component (B) | | PUD-1 | PUD-2 | PUD-3 | PUD-4 | PUD-1 | PUD-1 | PUD-4 | PUD-5 | PUD-1 | PUD-1 | PUD-1 | PUD-1 |
| % by mass of (A) based on total mass of resin components of components (A) and (B) | | 50% | 50% | 50% | 50% | 50% | 50% | 50% | 50% | 70% | 30% | 95% | 5% |
| % by mass of (B) based on total mass of resin components of components (A) and (B) | | 50% | 50% | 50% | 50% | 50% | 50% | 50% | 50% | 30% | 70% | 5% | 95% |
| Component (C) | | WT31-100 | WT-31-100 | WT31-100 | WT31-100 | WT31-100 | XP2655 | WT31-100 | WT31-100 | WT31-100 | WT31-100 | WT31-100 | WT31-100 |
| NCO/OH | | 1.25 | 1.25 | 1.25 | 1.25 | 1.25 | 1.25 | 1.25 | 1.25 | 1.25 | 1.25 | 1.25 | 1.25 |
| Finger touch drying time (min) | | AA | AA | AA | AA | AA | AA | AA | AA | AA | AA | A | AA |
| Soft-feel property | | AA | AA | AA | AA | AA | AA | AA | AA | AA | A | AA | B |
| Moist heat resistance | | A | A | A | A | A | A | B | B | A | A | A | B |
| Sunscreen resistance | 55°C×1h | A | A | A | A | A | A | A | A | A | A | A | A |
| | 55°C×4h | A | A | A | A | A | A | A | A | A | A | B | A |
| Thinning test | | AA | AA | AA | AA | AA | AA | B | B | A | AA | B | AA |

[Table 4]

Table 4

| | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|
| Component(A) | | WP-1 | WP-2 | - | - | - | - | - |
| Component(B) | | - | - | PUD-1 | PUD-2 | PUD-3 | PUD-4 | PUD-5 |
| % by mass of (A) based on total mass of resin components of components (A) and (B) | | 100% | 100% | 0% | 0% | 0% | 0% | 0% |
| % by mass of (B) based on total mass of resin components of components (A) and (B) | | 0% | 0% | 100% | 100% | 100% | 100% | 100% |
| Component(C) | | WT31-100 | WT31-100 | - | - | - | - | - |
| NCO/OH | | 1.25 | 1.25 | 0.00 | 0.00 | 0.00 | 0.00 | 0.00 |
| Finger touch drying time (min) | | B | B | AA | AA | AA | AA | AA |
| Soft-feel property | | AA | AA | B | B | B | B | B |
| Moist heat resistance | | A | A | C | C | C | C | C |
| Sunscreen resistance | 55°C×1h | A | A | B | C | A | C | C |
| | 55°C×4h | C | C | C | C | B | C | C |
| Thinning test | | - | - | - | - | C | - | - |

## Claims

1. An aqueous composition comprising the following component (A) and the following component (B):

   component (A): a water-dispersible polyol having a carbonate structure represented by the following formula (I), having a hydroxy value of 5 to 700 mg-KOH/g, and having a hydrophilic structure; and
   component (B): an aqueous polyurethane having a hydrophilic group:

   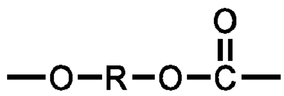 ... (I)

   wherein R represents a linear aliphatic hydrocarbon group optionally having a heteroatom, a branched aliphatic hydrocarbon group optionally having a heteroatom, a cyclic aliphatic hydrocarbon group optionally having a heteroatom, an aromatic hydrocarbon group optionally having a heteroatom, or a combination thereof.

2. The aqueous composition according to claim 1, wherein a content of the component (A) is 2 to 98% by mass and a content of the component (B) is 2 to 98% by mass based on the total mass of resin components of the component (A) and the component (B).

3. The aqueous composition according to claim 1, wherein the component (A) has a number-average molecular weight of 200 to 5000.

4. The aqueous composition according to claim 1, wherein the hydrophilic structure has a nonionic structure.

5. The aqueous composition according to claim 1, wherein the hydrophilic structure has an anionic structure.

6. The aqueous composition according to claim 1, wherein the component (B) has a cyclic structure.

7. The aqueous composition according to claim 1, wherein the component (B) has an alicyclic structure.

8. The aqueous composition according to claim 1, wherein the component (B) has a weight-average molecular weight of 10000 to 300000.

9. The aqueous composition according to claim 1, wherein the component (B) comprises at least one selected from the group consisting of an ether group, an ester group, and a carbonate group.

10. The aqueous composition according to claim 1, further comprising a curing agent as a component (C).

11. The aqueous composition according to claim 10, wherein the component (C) is an isocyanate compound.

12. The aqueous composition according to claim 10, wherein the component (C) has a cyclic structure.

13. The aqueous composition according to claim 10, wherein the component (C) has an isocyanurate ring.

14. A curable composition comprising the aqueous composition according to any one of claims 1 to 13.

15. A urethane cured product which is a cured product of the curable composition according to claim 14.

Europäisches Patentamt
European Patent Office
Office européen des brevets

# EUROPEAN SEARCH REPORT

Application Number
EP 23 19 2947

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CA 2 944 588 A1 (BASF COATINGS GMBH [DE]) 29 October 2015 (2015-10-29) * claims 1-15 * | 1-15 | INV. C08G18/08 C08G18/12 C08G18/32 C08G18/34 C08G18/44 C08G18/75 C08G18/79 C08L75/04 C09D175/04 C08G64/02 |
| X | EP 3 575 341 A1 (ASAHI CHEMICAL IND [JP]) 4 December 2019 (2019-12-04) * paragraphs [0105], [0117] - [0119]; claims 1-10 * | 1-15 | |
| X | EP 3 819 322 A1 (ASAHI CHEMICAL IND [JP]) 12 May 2021 (2021-05-12) * paragraphs [0125] - [0213]; examples 1-8; table 1 * | 1-15 | |
| A | EP 2 281 848 A1 (UBE INDUSTRIES [JP]) 9 February 2011 (2011-02-09) * claims 1-14 * | 1-15 | |
| A | CAKIC SUZANA M ET AL: "The waterborne polyurethane dispersions based on polycarbonate diol: Effect of ionic content", MATERIALS CHEMISTRY AND PHYSICS, ELSEVIER SA, SWITZERLAND, TAIWAN, REPUBLIC OF CHINA, vol. 138, no. 1, 21 December 2012 (2012-12-21), pages 277-285, XP028976231, ISSN: 0254-0584, DOI: 10.1016/J.MATCHEMPHYS.2012.11.057 * scheme 1 * | 1-15 | TECHNICAL FIELDS SEARCHED (IPC) C08G C08L C09D C09J |

The present search report has been drawn up for all claims

| Place of search | Date of completion of the search | Examiner |
|---|---|---|
| Munich | 7 February 2024 | Scheuer, Sylvie |

1

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 23 19 2947

This annex lists the patent family members relating to the patent documents cited in the above-mentioned European search report. The members are as contained in the European Patent Office EDP file on
The European Patent Office is in no way liable for these particulars which are merely given for the purpose of information.

07-02-2024

| Patent document cited in search report | Publication date | Patent family member(s) | Publication date |
|---|---|---|---|
| CA 2944588 A1 | 29-10-2015 | AR 100173 A1 | 14-09-2016 |
| | | BR 112016024638 A2 | 15-08-2017 |
| | | CA 2944588 A1 | 29-10-2015 |
| | | CN 106232662 A | 14-12-2016 |
| | | DK 3134452 T3 | 13-08-2018 |
| | | EP 2937368 A1 | 28-10-2015 |
| | | EP 3134452 A1 | 01-03-2017 |
| | | ES 2678369 T3 | 10-08-2018 |
| | | JP 2017515939 A | 15-06-2017 |
| | | PT 3134452 T | 03-08-2018 |
| | | US 2017044397 A1 | 16-02-2017 |
| | | WO 2015161952 A1 | 29-10-2015 |
| EP 3575341 A1 | 04-12-2019 | EP 3575341 A1 | 04-12-2019 |
| | | JP 7237468 B2 | 13-03-2023 |
| | | JP 2019210314 A | 12-12-2019 |
| EP 3819322 A1 | 12-05-2021 | CN 112778888 A | 11-05-2021 |
| | | EP 3819322 A1 | 12-05-2021 |
| | | JP 2021075717 A | 20-05-2021 |
| EP 2281848 A1 | 09-02-2011 | CN 102046686 A | 04-05-2011 |
| | | EP 2281848 A1 | 09-02-2011 |
| | | JP 5720246 B2 | 20-05-2015 |
| | | JP WO2009145242 A1 | 13-10-2011 |
| | | US 2011077352 A1 | 31-03-2011 |
| | | WO 2009145242 A1 | 03-12-2009 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2014080530 A
- WO 2015170374 A
- JP 2019210314 A
- JP 7114163 B
- JP 2018012769 A